# EUROPÄISCHE PATENTSCHRIFT

(11) **EP 4 120 196 B1**
(45) Veröffentlichungstag und Bekanntmachung des Hinweises auf die Patenterteilung: **27.08.2025**
(21) Anmeldenummer: 21184986.4
(22) Anmeldetag: 12.07.2021
(51) Int. Cl.: G06T 11/00

(54) **VERBESSERTE METALL-ARTEFAKT REDUKTION DURCH BEWEGUNGS-ARTEFAKT-KOMPENSATION**
IMPROVED METAL ARTIFACT REDUCTION BY MOTION ARTIFACT COMPENSATION
RÉDUCTION AMÉLIORÉE DES ARTEFACTS MÉTALLIQUES PAR COMPENSATION DES ARTEFACTS DE MOUVEMENT

(43) Veröffentlichungstag der Anmeldung: 18.01.2023
(73) Patentinhaber: DENTSPLY SIRONA Inc., York, PA 17401 (US); Sirona Dental Systems GmbH, 64625 Bensheim (DE)
(72) Erfinder: Schulze-Ganzlin, Ulrich, 64653 Lorsch (DE); Maur, Susanne, 64625 Bensheim (DE); Hülsbusch, Markus, 64625 Bensheim (DE)
(74) Vertreter: Taor, Simon Edward William

(56) Entgegenhaltungen:
- HAHN ANDREAS ET AL: "Two methods for reducing moving metal artifacts in cone-beam CT", MEDICAL PHYSICS., vol. 45, no. 8, August 2018 (2018-08-01), US, pages 3671 - 3680, XP055872245, ISSN: 0094-2405, DOI: 10.1002/mp.13060
- BREHM M ET AL: "Artifact-resistant motion estimation with a patient-specific artifact model for motion-compensated cone-beam CT", MEDICAL PHYSICS 2013 JOHN WILEY AND SONS LTD USA, vol. 40, no. 10, 2013, XP012178423, DOI: 10.1118/1.4820537
- MAUR SUSANNE: "Geometrische Autokalibrierung für die dentale Volumentomographie", 22 June 2020 (2020-06-22), Heidelberg, Germany, pages 1 - 174, XP055872274, Retrieved from the Internet <URL:http://www.ub.uni-heidelberg.de/archiv/28433> [retrieved on 20211213]

## Beschreibung

### TECHNISCHES GEBIET DER ERFINDUNG

Die vorliegende Erfindung bezieht sich auf ein Verfahren zur Rekonstruktion einer digitalen Volumen Tomographie (DVT) im dentalen Bereich. Die vorliegende Erfindung bezieht sich insbesondre auf die Reduktion von Metall-Artefakten in einer DVT Aufnahme.

### HINTERGRUND DER ERFINDUNG

Bei einer DVT Aufnahme stehen die bildgebenden Komponenten Röntgenstrahler und Röntgendetektor einander gegenüber und rotieren um den Patienten. Hierbei wird eine Sequenz von Röntgenprojektionsaufnahmen erzeugt, welche ein Sinogramm bilden. Unter Kenntnis der Projektionsgeometrie wird aus dem Sinogramm ein Volumen rekonstruiert. Die Projektionsgeometrie beschreibt die geometrischen Eigenschaften des DVT-Geräts und dessen Trajektorie während der Aufnahme. Sie kann mittels Projektionsmatrizen ausgedrückt werden.

Bei einer DVT-Aufnahme führen Röntgen-opake Strukturen wie Metalle zu Bildartefakten im rekonstruierten Volumen. Die Bildartefakte entstehen, wenn die Sensitivität des Röntgendetektors nicht ausreicht, um die Röntgen-Abschwächung physikalisch genau genug abzubilden. Dies führt vor allem hinter stark absorbierenden, sogenannten Röntgenopaken Strukturen zu Problemen, da dort das Rauschen überwiegt. Dies führt zu inkonsistenten Werten im Rekonstruktionsverfahren, welche sich oft in Streifen-Artefakten im Volumen darstellen.

Es gibt bekannte Software-Verfahren zur Korrektur dieser Bildartefakte, welche hier der Einfachheit halber Verfahren zur Metall-Artefakt-Reduktion (MAR) genannt werden. Sie ersetzten die Metallbereiche im Sinogramm mit plausiblen Werten, so dass die MetallArtefakte im gesamten rekonstruierten Volumen verringert werden. Nach der Rekonstruktion werden die Metallbereiche im Volumen mit plausiblen Werten ersetzt.

Bekannte Verfahren zur Metall-Artefakt-Reduktion liefern eine verminderte Qualität, wenn der Patient sich während der DVT Aufnahme bewegt oder das Gerät unzureichend kalibriert ist. Der Grund hierfür ist, dass viele der MAR-Verfahren im Volumen detektierte Metallbereiche in das Sinogramm projizieren oder andersherum. Bei Patientenbewegungen oder unzureichender Gerätekalibrierung ist hierbei sowohl die Metall-Detektion im Artefakt-behafteten Volumen als auch die Projektion der Metallbereiche aufgrund der fehlerhaften Berücksichtigung der Projektionsgeometrie ungenau. Die Inkonsistenzen in der Rekonstruktion führen zu deutlichen verbleibenden Metall-Artefakten im Volumen.

Aufgrund der ungenauen Projektionsgeometrie wird daher sowohl im Sinogramm als auch im Volumen zu viel oder zu wenig oder an der falschen Stelle korrigiert. Zur Abminderung der genannten Probleme bei ungenauer Projektionsgeometrie wird meist eine Vergrößerung der detektierten Metallbereiche beziehungsweise eines Unsicherheitsbereichs um die detektierten Metallbereiche vorgenommen. Dies führt zu einer zusätzlichen Ungenauigkeit der MAR, da auch physikalisch exakt gemessene Bereiche des Sinogramms ersetz werden. Die Stärke der Vergrößerung ergibt sich aus einer maximal tolerierten Ungenauigkeit der Projektionsgeometrie.

Es wird ferner auf die folgende Dokumente verwiesen:
Hahn Andreas et al, "Two methods for reducing moving metal artifacts in cone-beam CT", Medical Physics., US, (201808), vol. 45, no. 8, doi:10.1002/mp.13060, ISSN 0094-2405, pages 3671 - 3680, XP055872245A.
Brehm M. et al, "Artifact-resistant motion estimation with a patient-specific artifact model for motion-compensated cone-beam CT", Medical Physics 2013 John Wiley and Sons Ltd USA, (2013), vol. 40, no. 10, doi:10.1118/1.4820537, XP012178423A.
Maur Susanne, "Geometrische Autokalibrierung für die dentale Volumentomographie", Heidelberg, Germany, (20200622), pages 1 - 174, URL: http://www.ub.uniheidelberg.de/archiv/28433, (20211213), XP055872274A.

### OFFENBARUNG DER ERFINDUNG

Das Ziel der vorliegenden Erfindung ist ein Verfahren zur Rekonstruktion einer digitalen Volumen Tomographie (DVT) Aufnahme in der Röntgenkegelstrahl-Computertomographie bereitzustellen, womit die genannten Nachteile des Standes der Technik überwunden werden können.

Dieses Ziel wird durch das Verfahren nach Anspruch 1 erreicht. Die Gegenstände der abhängigen Ansprüche beziehen sich auf Weiterentwicklungen und bevorzugte Ausführungsbeispiele.

Das erfindungsgemäße Verfahren dient zur Rekonstruktion einer DVT Aufnahme. Es umfasst folgenden Schritte: Schätzung der Projektionsgeometrie aus dem Sinogramm einer Patientenaufnahme mittels Bewegungs-Artefakt-Kompensation (MAC); Rekonstruktion eines ersten Volumens mit der geschätzten Projektionsgeometrie; Detektion der Metallbereiche im Sinogramm und im ersten Volumen mithilfe des ersten Volumens und der geschätzten Projektionsgeometrie; Korrektur der Metallbereiche im Sinogramm und Erzeugung eines korrigierten Sinogramms; Rekonstruktion eines zweiten Volumens mit der geschätzten Projektionsgeometrie und dem korrigierten Sinogramm; und Korrektur der Metallbereiche im zweiten Volumen.

Ein wesentlicher vorteilhafter Effekt der vorliegenden Erfindung ist die bessere Korrektur der Metallartefakte, welche in der höheren Genauigkeit der Korrektur begründet liegt und die somit einhergehende verbesserte Bildqualität des rekonstruierten Volumens.

### KURZBESCHREIBUNG DER ZEICHNUNGEN

In der nachfolgenden Beschreibung wird die vorliegende Erfindung anhand von beispielhaften Ausführungsformen und unter Bezugnahme auf die Zeichnungen näher erläutert, wobei
Abb. 1 - zeigt ein Flussdiagram gemäß einer Ausführungsform der Erfindung;
Abb. 2 - zeigt ein computergestütztes DVT-System, auf dem das erfindungsgemäße Verfahren durchgeführt werden kann;
Abb.3a - zeigt eine axiale Schicht eines DVT Volumens ohne MAC mit unzureichend korrigierten Metallartefakten aus dem Stand der Technik;
Abb.3b - zeigt eine axiale Schicht eines DVT Volumens mit MAC mit deutlich konturierten "Metall" Füllungen gemäß einer Ausführungsform der vorliegenden Erfindung.

Die in den Zeichnungen gezeigten Referenznummern bezeichnen die unten aufgeführten Elemente, auf die in der nachfolgenden Beschreibung der beispielhaften Ausführungsformen Bezug genommen wird.
- 1.: DVT-System
- 2.: Röntgengerät
- 3.: Röntgenstrahler
- 4.: Röntgendetektor
- 5.: Bedienungseinheit
- 6.: Kopffixierung
- 7.: Aufbiss
- 8.: Rechner
- 9.: Anzeige

- a.: Kieferbogen
- b.: Zahn
- c.: Metallfüllung
- d.: Metallartefakte

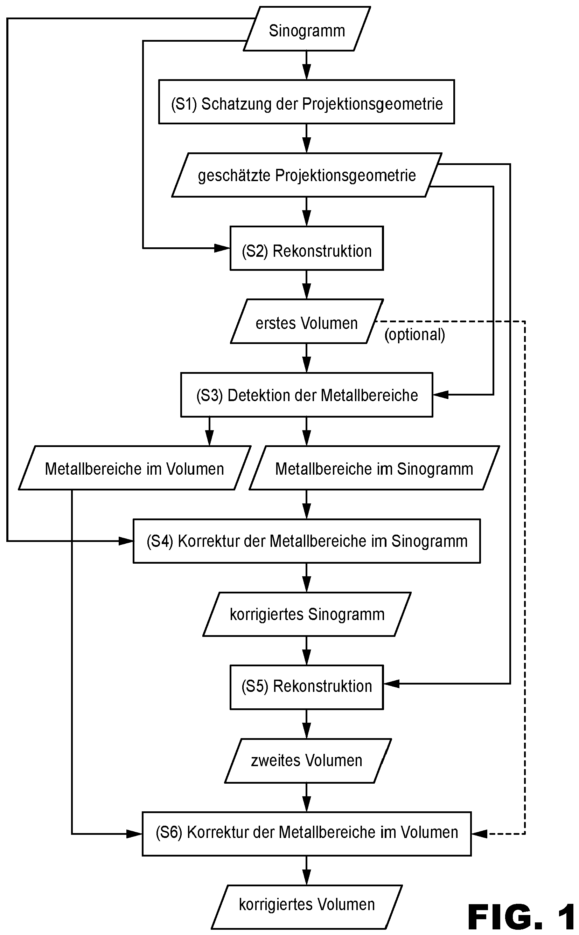

Das erfindungsgemäße Verfahren (s. Abb. 1) dient zur Rekonstruktion einer digitalen Volumen Tomographie (DVT) Aufnahme im dentalen Bereich. Das Verfahren umfasst folgende Schritte: (S1) Schätzung der Projektionsgeometrie aus dem Sinogramm einer Patientenaufnahme mittels Bewegungs-Artefakt-Kompensation (MAC); (S2) Rekonstruktion eines ersten Volumens mit der geschätzten Projektionsgeometrie; (S3) Detektion der Metallbereiche im Sinogramm und im ersten Volumen mithilfe des ersten Volumens und der geschätzten Projektionsgeometrie; (S4) Korrektur der Metallbereiche im Sinogramm und Erzeugung eines korrigierten Sinogramms; (S5) Rekonstruktion eines zweiten Volumens mit der geschätzten Projektionsgeometrie und dem korrigierten Sinogramm; und (S6) Korrektur der Metallbereiche im zweiten Volumen.

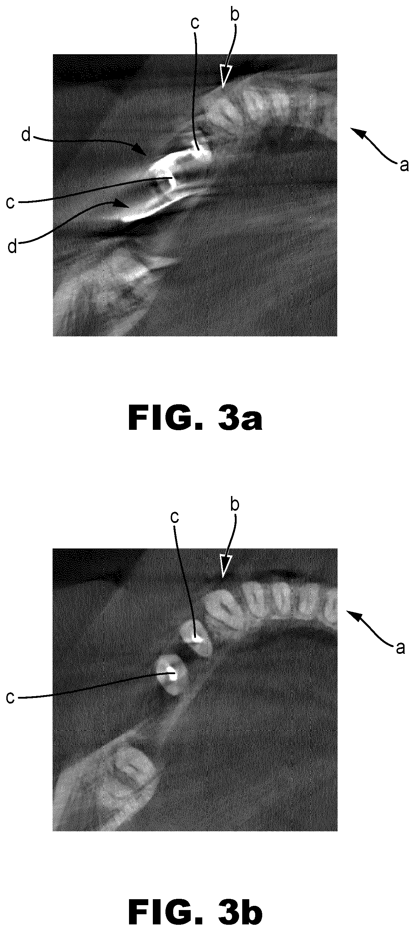

Abb.3a zeigt eine axiale Schicht eines DVT Volumens, die nach dem Stand der Technik *ohne* MAC rekonstruiert wurde. Abb.3b zeigt dieselbe durch das erfindungsgemäße Verfahren erzeugte axiale Schicht des DVT Volumens mit MAC. In Abb.3b sind die Metallfüllungen (c) mit deutlichen Konturen ersichtlich. Die Metallartefakte (d) aus Abb.3a, die sowohl den Kieferbogen (a) als auch die einzelnen Zähne (b) überdecken, sind in Abb. 3b deutlich reduziert.

In einer bevorzugten Ausführungsform unterscheidet sich das erste Volumen von dem zweiten Volumen bezüglich der Auflösung und/oder der Anzahl der verwendeten Projektionen und/oder der verwendeten Bildbearbeitung. Hierbei dient das erste Volumen ausschließlich zur Detektion der Metallbereiche für die MAR und das zweite Volumen dient der Visualisierung und der weiteren Diagnose. Somit kann das erste Volumen zur Einsparung von Rechenzeit und Speicherverbrauch mit geringeren Ansprüchen an die resultierende Bildqualität erzeugt werden. Insbesondere kann bei der Berechnung des ersten Volumens die Voxelauflösung geringer sein, es kann eine Unterabtastung der Projektionen vorgenommen werden und es können Bildbearbeitungsschritte auf den Projektionen und/oder dem Volumen wegfallen.

In einer weiteren bevorzugten Ausführungsform erfolgt die Detektion der Metallbereiche im Sinogramm in Schritt (S3) durch zwei Unterschritte. Diese sind: (S3.1) Detektion der Metallbereiche im ersten Volumen vorzugsweise durch Verwendung von Schwellwerten und/oder der Form der Metallstrukturen; und (S3.2) Projektion der detektierten Metallbereiche ins Sinogramm mit der geschätzten Projektionsgeometrie. Die Detektion der Metallbereiche ist im Volumen einfacher als im Sinogramm aufgrund der Überlagerung der Strukturen im Sinogramm. Durch die Projektion, der im ersten Volumen detektierten Metallbereiche ins Sinogramm mit der geschätzten Projektionsgeometrie wird eine Detektion der Metallbereiche im Sinogramm erzielt.

In einer bevorzugten alternativen Ausführungsform erfolgt die Detektion der Metallbereiche im Sinogramm (4) in Schritt (S3) durch drei weitere Unterschritte: Diese sind (S3.1) Erzeugung eines simulierten Sinogramms des ersten Volumens unter Verwendung der geschätzten Projektionsgeometrie; (S3.2) Detektion der Metallbereiche im simulierten Sinogramm und Übertragung der detektierten Metallbereiche auf das Sinogramm; (S3.3) Bestimmung der Metallbereiche im ersten Volumen mithilfe der geschätzten Projektionsgeometrie und der detektierten Metallbereiche im Sinogramm. Wenn die geschätzte Projektionsgeometrie bei der Rekonstruktion des ersten Volumens und bei der Erzeugung des simulierten Sinogramms verwendet wurde, ist die Übertragung der detektierten Metallbereiche vom simulierten Sinogramm auf das Sinogramm trivial, da die Bildbereiche identisch sind. Die Detektion der Metallbereiche ist im simulierten Sinogramm einfacher als im Sinogramm, da bei der Erzeugung des simulierten Sinogramms eine vereinfachte Darstellung der überlagerten Strukturen erreicht wird. Die im simulierten Sinogramm detektierten Metallbereiche können auf das Sinogramm übertragen werden, da bei der Erzeugung des simulierten Sinogramms die für das Sinogramm geschätzte Projektionsgeometrien verwendet wurde. Durch die Projektion, der im simulierten Sinogramm detektierten Metallbereiche ins erste Volumen mit der geschätzten Proj ektionsgeometrie wird eine Detektion der Metallbereiche im ersten Volumen erzielt.

In einer weiteren bevorzugten Ausführungsform, erfolgt die Korrektur der Metallbereiche im Sinogramm in Schritt (S4) durch einen oder mehrere der folgenden Unterschritte: (S4.1) Füllen der Metallbereiche im Sinogramm mit neuen Pixelwerten, welche entweder aus den Nachbar-Pixeln berechnet werden oder künstlichen Pixelwerten entsprechen; (S4.2) Gewichtetes Überblenden der neuen Pixelwerte aus dem vorangegangenen Schritt (S4.1) mit den Pixelwerten des Sinogramms. Die Metallbereiche im Sinogramm können aufgrund der starken Absorption physikalisch nicht korrekt gemessen werden. Durch Ersetzung mit plausiblen Pixelwerte kann die Entstehung von Metallartefakten während der Rekonstruktion vermieden werden. Die neuen, plausiblen Pixelwerte können künstliche Werte sein oder aus Nachbar-Pixeln im Sinogramm berechnet werden. Durch ein gewichtetes Überblenden der neuen Pixelwerte mit den ursprünglichen Pixelwerten wird ein Teil der unsicheren physikalischen Information erhalten.

In einer weiteren bevorzugten Ausführungsform, erfolgt die Korrektur der Metallbereiche im zweiten Volumen in Schritt (S6) durch einen oder mehrere der folgenden Unterschritte: (S6.1) Füllen der Metallbereiche im zweiten Volumen mit Werten aus dem rekonstruierten ersten Volumen oder künstlichen Werten; (S6.2) Gewichtetes Überblenden der neuen Werten dem aus vorhergehenden Schritt (S6.1) mit den Werten des zweiten Volumens.

Aufgrund der Ersetzung der Metallbereiche im Sinogramm sind die Werte in den Metallbereichen im daraus rekonstruierten zweiten Volumen stark verfälscht, sie weisen eine deutlich zu niedrige Absorption auf. Durch das Wiedereinsetzen von Werten aus dem ersten Volumen oder die Ersetzung mit plausiblen, künstlichen Werten wird die Existenz der Metallbereiche im zweiten Volumen visualisiert. Durch ein gewichtetes Überblenden der neuen Voxelwerte mit den ursprünglichen Voxelwerten wird ein gefälliger Bildeindruck erzielt.

In einer weiteren bevorzugten Ausführungsform, umfasst die MAC in Schritt (S1) folgende Unterschritte, welche vorzugsweise iterativ wiederholt werden bis ein Konvergenzkriterium erreicht ist: (S1.1) Rekonstruktion eines dritten Volumens mit geschätzter Proj ektionsgeometrie; (S1.2) Schätzung der Proj ektionsgeometrie durch Registrierung der Projektionsbilder des Sinogramms mit dem dritten Volumen.

Patientenbewegung oder abweichende Gerätebewegungen führen zu Abweichungen zwischen dem rekonstruierten Volumen und den Projektionsbildern des Sinogramms. Die Registrierung erkennt diese Abweichungen und kompensiert sie durch Anpassung der Projektionsgeometrie. Die Anpassung der Projektionsgeometrie erfolgt durch Variation geometrischer Parameter. Die geometrischen Parameter bestehen vorzugsweise aus intrinsischen Parametern und extrinsischen Parametern, wobei die intrinsischen Parameter die projektiven Eigenschaften von Röntgendetektor und Röntgenstrahler relativ zueinander beschreiben und die extrinsischen Parameter eine Transformation bestehend aus Rotation und Translation pro Projektionsbild und selektiertem Teilbereich des Volumens beschreiben. Als Verfahren zur Schätzung der geometrischen Parameter können sogenannte "Optimierungsverfahren" verwendet werden. Die wiederholte Rekonstruktion des dritten Volumens mit der angepassten Projektionsgeometrie aktualisiert das Referenzvolumen für die Registrierung. Mögliche Konvergenzkriterien sind: a) ob die Änderung der Projektionsgeometrie kleiner als ein Schwellwert ist; b) ob die Güte der Registrierung größer als ein Schwellwert ist; c) ob die Anzahl der Iterationsschritte größer als ein Schwellwert ist; d) ob die Rechenzeit größer als ein Schwellwert ist.

Vorzugsweise kann die MAC in Schritt (S1) die zu schätzende Proj ektionsgeometrie mit Projektionsmatrizen beschrieben werden. Vorzugsweise kann die MAC in Schritt (S1) die Projektionsgeometrie auf Basis einer existierenden geometrischen Gerätekalibrierung schätzen und diese durch eine zusätzliche rigide Bewegung ergänzen, welche durch drei Rotationsparameter und drei Translationsparameter pro Projektionsbild des Sinogramms beschrieben werden. Optional können zusätzlich die intrinsischen Parameter geschätzt werden..

In einer weiteren bevorzugten Ausführungsform erfolgt die Registrierung der Projektionsbilder in Schritt (S1.2) durch Erzeugung simulierter Sinogramme mit der geschätzten Projektionsgeometrie und deren Vergleich mit dem Sinogramm durch Ähnlichkeitsmaße. Bei der Erzeugung eines simulierten Sinogramms wird eine Vorwärtsprojektion des dritten Volumens unter Anwendung der geschätzten Projektionsgeometrie durchgeführt. Bei Anwendung der korrekten Projektionsgeometrie ist die Ähnlichkeit zwischen dem simulierten Sinogramms und dem Sinogramm maximal. Zur Bewertung der Ähnlichkeit sind mehrere Ähnlichkeitsmaße in der Literatur bekannt. An Stelle eines Ähnlichkeitsmaßes kann auch ein negiertes Differenzmaß verwendet werden. Folgende Ähnlichkeits- oder Fehlermaße können in dem Registrierungsverfahren Anwendung finden: Mean Square Error, Mean Absolute Difference, Normalized Cross-correlation, Gradient Correlation, Gradient Information, Gradient Information with linear Scaling, Gradient Orientation, Mutual Information.

In einer weiteren bevorzugten alternativen Ausführungsform umfasst die MAC in Schritt (S1) eine Schätzung der Projektionsgeometrie durch die Auswertung von Metriken auf ein oder mehreren Konsistenzbedingungen im Sinogramm. Die Schätzung der Projektionsgeometrie durch die Auswertung von Metriken auf Konsistenzbedingungen im Sinogramm hat den Vorteil, dass keine Rekonstruktion eines Volumens erforderlich ist.

Folgende Konsistenzbedingungen können in dem Verfahren zur Schätzung der Projektionsgeometrie Anwendung finden: Data Consistency, Epipolar Consistency, Fourier Consistency, Grangeat's Theorem, Cross-correlation.

In einer weiteren bevorzugten alternativen Ausführungsform umfasst die MAC in Schritt (S1) folgende Unterschritte, welche vorzugsweise iterativ wiederholt werden: (S1.1) Rekonstruktion eines dritten Volumens mit der geschätzten Projektionsgeometrie; (S1.2) Berechnung einer Bildqualitätsmetrik auf dem dritten Volumen, wie ein Schärfemaß oder die Auswertung einer Glattheitsbedingung; (S1.3) Anpassung der geschätzten Projektionsgeometrie zur Verbesserung der Bildqualitätsmetrik. Bildqualitätsmetriken korrelieren oft mit dem Vorhandensein von Bewegungsartefakten. Durch Verbesserung der Bildqualitätsmetriken durch Anpassung der Projektionsgeometrie kann eine Reduktion der Bewegungsartefakte erzielt werden. Die Anpassung der Projektionsgeometrie erfolgt durch Variation geometrischer Parameter, vorzugsweise in einem iterativen Verfahren.

Bildqualitätsmetriken können Schärfemaße auf dem Volumen sein, wie z.B. die Gradientenvarianz oder die Gradientennorm, oder durch Glattheitsbedingungen auf dem Volumen definiert sein, wie z.B. Entropie der Grauwerte, Varianz der Grauwerte oder Total Variation.

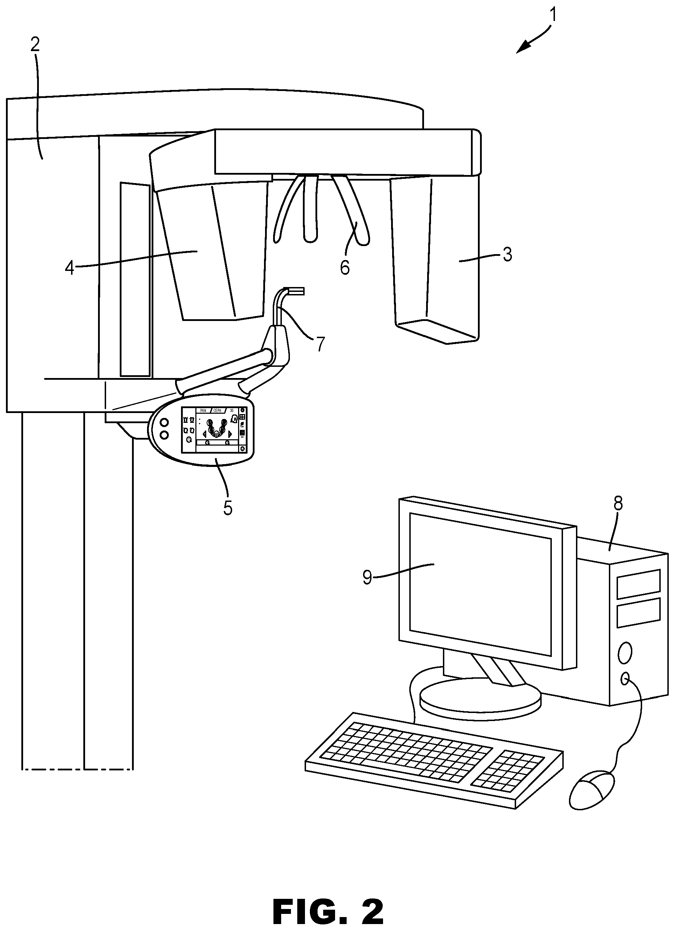

Das erfindungsgemäße Verfahren ist ein Computer implementierbares Verfahren, und kann auf einem computergestützten DVT-System (1) ausgeführt werden. Abb. 2 zeigt ein Ausführungsbespiel für ein DVT-System (1). Hierzu umfasst die vorliegende Erfindung auch ein Computerprogramm mit computerlesbarem Code. Das Computerprogramm kann auf einem Datenspeicher bereitgestellt werden. Das computergestützte DVT-System (1) umfasst ein Röntgengerät (2) zur Durchführung der Patientenaufnahme, wobei das Sinogramm erzeugt wird. Das Röntgengerät (2) hat einen Röntgenstrahler (3) und Röntgendetektor (4), die während der Aufnahme um den Patiententkopf gedreht werden. Die Trajektorie des Röntgenstrahlers (3) und des Röntgendetektors (4) während der Aufnahme kann eine Kreisbahn beschreiben. Alternativ kann sie eine davon abweichende Form annehmen. Bei einer gleichzeitigen Ansteuerung mehrerer Aktuatoren, kann eine von einer reinen Kreisbahn abweichende Gerätetrajektorie um den Patientenkopf erzielt werden. Der Patientenkopf wird mit dem Aufbiss (7) und der Kopffixierung (6) im Röntgengerät positioniert. Das computergestützte DVT-System (1) umfasst eine Bedienungseinheit (5), vorzugsweise einen Rechner (8) oder eine Recheneinheit, die mit dem Röntgengerät (2) verbunden werden kann, und vorzugsweise eine Anzeige (9), u.a. um die Datensätze zu visualisieren. Der Rechner (8) kann über ein lokales Netzwerk (nicht gezeigt) oder alternativ über das Internet mit dem Röntgengerät (2) verbunden werden. Der Rechner (8) kann Teil einer Cloud sein. Alternativ kann der Rechner (3) in das Röntgengerät (2) integriert werden. Die Berechnungen können alternativ in der Cloud stattfinden. Der Rechner (8) führt das Computerprogramm aus und liefert die Datensätze, u.a. auch für die Visulisierung auf der Anzeige (9). Die Anzeige (9) kann räumlich von dem Röntgengerät (2) getrennt sein. Der Rechner (8) kann vorzugsweise auch das Röntgengerät (2) steuern. Alternativ können separate Rechner für die Steuerung und die Rekonstruktion benutzt werden.

Gemäß der vorliegenden Erfindung können die Datensätze, die durch die oben aufgeführte Ausführungsformen erzeugt werden, zur Visualisierung, insbesondere für diagnostische Zwecke, einem Arzt vorgelegt werden, vorzugsweise mittels einer Anzeige (9) oder eines Ausdrucks.

## Patentansprüche

1. Verfahren zur Rekonstruktion einer digitalen Volumen Tomographie (DVT) Aufnahme im dentalen Bereich, **dadurch gekennzeichnet, dass** es die folgenden Schritte umfasst:
(S1) Schätzung der Projektionsgeometrie aus dem Sinogramm einer Patientenaufnahme mittels Bewegungs-Artefakt-Kompensation (MAC);
(S2) Rekonstruktion eines ersten Volumens mit der geschätzten Proj ektionsgeometrie;
(S3) Detektion der Metallbereiche im Sinogramm und im ersten Volumen (1) mithilfe des ersten Volumens und der geschätzten Projektionsgeometrie;
(S4) Korrektur der Metallbereiche im Sinogramm und Erzeugung eines korrigierten Sinogramms;
(S5) Rekonstruktion eines zweiten Volumens mit der geschätzten Projektionsgeometrie und dem korrigierten Sinogramm; und
(S6) Korrektur der Metallbereiche im zweiten Volumen.

2. Verfahren nach Anspruch 1, **gekennzeichnet dadurch, dass** das erste Volumen sich von dem zweiten Volumen bezüglich der Auflösung und/oder der Anzahl der verwendeten Projektionen und/oder der verwendeten Bildbearbeitung unterscheidet.

3. Verfahren nach einem der vorangegangenen Ansprüche, **gekennzeichnet dadurch, dass** die Detektion der Metallbereiche im Sinogramm in Schritt (S3) besteht aus:
(S3.1) Detektion der Metallbereiche im ersten Volumen vorzugsweise durch Verwendung von Schwellwerten und/oder der Form der Metallstrukturen;
(S3.2) Projektion der detektierten Metallbereichen ins Sinogramm mit der geschätzten Proj ektionsgeometrie.

4. Verfahren nach einem der Ansprüche 1-2, **gekennzeichnet dadurch, dass** die Detektion der Metallbereiche im Sinogramm in Schritt (S3) besteht aus:
(S3.1) Erzeugung eines simulierten Sinogramms des ersten Volumens unter Verwendung der geschätzten Projektionsgeometrie;
(S3.2) Detektion der Metallbereiche im simulierten Sinogramm und Übertragung der detektierten Metallbereiche auf das Sinogramm;
(S3.3) Bestimmung der Metallbereiche im ersten Volumen mithilfe der geschätzten Projektionsgeometrie und der detektierten Metallbereiche im Sinogramm.

5. Verfahren nach einem der vorangegangenen Ansprüche, **gekennzeichnet dadurch, dass** die Korrektur der Metallbereiche im Sinogramm in Schritt (S4) besteht aus einem oder mehreren der folgenden Schritte:
(S4.1) Füllen der Metallbereiche im Sinogramm mit neuen Pixelwerten, welche entweder aus den Nachbar-Pixeln berechnet werden oder künstlichen Pixelwerten entsprechen;
(S4.2) Gewichtetes Überblenden der neuen Pixelwerte aus dem vorangegangenen Schritt (S4.1) mit den Pixelwerten des Sinogramms.

6. Verfahren nach einem der vorangegangenen Ansprüche, **gekennzeichnet dadurch, dass** die Korrektur der Metallbereiche im zweiten Volumen in Schritt (S6) besteht aus einem oder mehreren der folgenden Schritte:
(S6.1) Füllen der Metallbereiche im zweiten Volumen mit Werten aus dem rekonstruierten ersten Volumen oder künstlichen Werten;
(S6.2) Gewichtetes Überblenden der neuen Werten aus dem vorhergehenden Schritt (S6.1) mit den Werten des zweiten Volumens.

7. Verfahren nach einem der vorangegangenen Ansprüche, **gekennzeichnet dadurch, dass** die MAC in Schritt (S1) folgende Schritte umfasst und vorzugsweise iterativ wiederholt bis ein Konvergenzkriterium erreicht ist:
(S1.1) Rekonstruktion eines dritten Volumens mit geschätzter Proj ektionsgeometrie;
(S1.2) Schätzung der Projektionsgeometrie durch Registrierung der Projektionsbilder des Sinogramms mit dem dritten Volumen.

8. Verfahren nach Anspruch 7, **gekennzeichnet dadurch, dass** die Registrierung der Projektionsbilder in Schritt (S1.2) erfolgt durch Erzeugung simulierter Sinogramme mit der geschätzten Projektionsgeometrie und deren Vergleich mit dem Sinogramm durch Ähnlichkeitsmaße.

9. Verfahren nach einem der Ansprüche 1-6, **gekennzeichnet dadurch, dass** die MAC in Schritt (S1) eine Schätzung der Projektionsgeometrie durchführt durch die Auswertung von Metriken auf ein oder mehreren Konsistenzbedingungen im Sinogramm.

10. Verfahren nach einem der Ansprüche 1-6, **gekennzeichnet dadurch, dass** die MAC in Schritt (S1) folgende Schritte umfasst und vorzugsweise iterativ wiederholt:
(S1.1) Rekonstruktion eines dritten Volumens mit der geschätzten Proj ektionsgeometrie;
(S1.2) Berechnung einer Bildqualitätsmetrik auf dem dritten Volumen wie einem Schärfemaß oder der Auswertung einer Glattheitsbedingung;
(S1.3) Anpassung der geschätzten Projektionsgeometrie zur Verbesserung der Bildqualitätsmetrik.

11. Computerprogramm umfassend computerlesbare Code, das, wenn es von einem computergestützten DVT-System (1) ausgeführt wird, dieses veranlasst, die Verfahrensschritte einer der vorhergehenden Verfahrensansprüche auszuführen.

12. Computergestütztes DVT-System (1) umfassend ein Röntgengerät (2) und eine Recheneinheit (8) die zur Ausführung des Computerprogramms nach Anspruch 11 konfiguriert ist.

## Claims

1. A method for reconstructing a cone beam computed tomography (CBCT) image in the dental field, **characterised in that** it comprises the following steps:
(S1) estimating the projection geometry from the sinogram of a patient image by means of motion artifact compensation (MAC);
(S2) reconstructing a first volume with the estimated projection geometry;
(S3) detecting the metal regions in the sinogram and in the first volume (1) with the aid of the first volume and the estimated projection geometry;
(S4) correcting the metal regions in the sinogram and generating a corrected sinogram;
(S5) reconstructing a second volume with the estimated projection geometry and the corrected sinogram; and
(S6) correcting the metal regions in the second volume.

2. The method according to Claim 1, **characterised in that** the first volume differs from the second volume with respect to the resolution and/or the number of projections used and/or the image processing used.

3. The method according to any one of the preceding claims, **characterised in that** the detection of the metal regions in the sinogram in step (S3) consists of:
(S3.1) detecting the metal regions in the first volume preferably by using threshold values and/or the shape of the metal structures;
(S3.2) projecting the detected metal regions into the sinogram with the estimated projection geometry.

4. The method according to either one of Claims 1 - 2, **characterised in that** the detection of the metal regions in the sinogram in step (S3) consists of:
(S3.1) generating a simulated sinogram of the first volume using the estimated projection geometry;
(S3.2) detecting the metal regions in the simulated sinogram and transferring the detected metal regions to the sinogram;
(S3.3) determining the metal regions in the first volume with the aid of the estimated projection geometry and the detected metal regions in the sinogram.

5. The method according to any one of the preceding claims, **characterised in that** the correction of the metal regions in the sinogram in step (S4) consists of one or more of the following steps:
(S4.1) filling the metal regions in the sinogram with new pixel values which are either calculated from the neighbouring pixels or correspond to artificial pixel values;
(S4.2) weighted blending of the new pixel values from the preceding step (S4.1) with the pixel values of the sinogram.

6. The method according to any one of the preceding claims, **characterised in that** the correction of the metal regions in the second volume in step (S6) consists of one or more of the following steps:
(S6.1) filling the metal regions in the second volume with values from the reconstructed first volume or artificial values;
(S6.2) weighted blending of the new values from the preceding step (S6.1) with the values of the second volume.

7. The method according to any one of the preceding claims, **characterised in that** the MAC in step (S1) comprises and preferably iteratively repeats the following steps until a convergence criterion is reached:
(S1.1) reconstructing a third volume with estimated projection geometry;
(S1.2) estimating the projection geometry by registering the projection images of the sinogram with the third volume.

8. The method according to Claim 7, **characterised in that** the registration of the projection images in step (S1.2) is carried out by generating simulated sinograms with the estimated projection geometry and comparing them with the sinogram by similarity measures.

9. The method according to any one of Claims 1 - 6, **characterised in that** the MAC in step (S1) performs an estimation of the projection geometry by evaluating metrics on one or more consistency conditions in the sinogram.

10. The method according to any one of Claims 1 - 6, **characterised in that** the MAC in step (S1) comprises and preferably iteratively repeats the following steps:
(S1.1) reconstructing a third volume with the estimated projection geometry;
(S1.2) calculating an image quality metric on the third volume such as a sharpness measure or the evaluation of a smoothness condition;
(S1.3) adjusting the estimated projection geometry to improve the image quality metric.

11. A computer program comprising computer-readable code which, when it is executed by a computerised CBCT system (1), prompts said system to execute the method steps of any one of the preceding method claims.

12. A computerised CBCT system (1) comprising an X-ray device (2) and a computing unit (8) which is configured to execute the computer program according to Claim 11.

## Revendications

1. Procédé de reconstruction d'une tomographie numérique de volume (TNV) dans la région dentaire, **caractérisé en ce qu'**il comprend les étapes suivantes :
(S1) Estimation de la géométrie de projection à partir du sinogramme d'une radiographie de patient au moyen de la compensation des artefacts de mouvement (MAC) ;
(S2) Reconstruction d'un premier volume avec la géométrie de projection estimée ;
(S3) Détection des zones métalliques dans le sinogramme et dans le premier volume (1) à l'aide du premier volume et de la géométrie de projection estimée ;
(S4) Correction des zones métalliques dans le sinogramme et génération d'un sinogramme corrigé ;
(S5) Reconstruction d'un deuxième volume avec la géométrie de projection estimée et le sinogramme corrigé ; et
(S6) Correction des zones métalliques dans le deuxième volume.

2. Procédé selon la revendication 1, **caractérisé en ce que** le premier volume diffère du deuxième volume quant à la résolution et/ou le nombre de projections utilisées et/ou le traitement d'image utilisé.

3. Procédé selon l'une des revendications précédentes, **caractérisé en ce que** la détection des zones métalliques dans le sinogramme à l'étape (S3) consiste à la :
(S3.1) Détection des zones métalliques dans le premier volume, de préférence en utilisant des valeurs de seuil et/ou la forme des structures métalliques ;
(S3.2) Projection des zones métalliques détectées dans le sinogramme avec la géométrie de projection estimée.

4. Procédé selon l'une des revendications 1 à 2, **caractérisé en ce que** la détection des zones métalliques dans le sinogramme à l'étape (S3) consiste à la :
(S3.1) Génération d'un sinogramme simulé du premier volume en utilisant la géométrie de projection estimée ;
(S3.2) Détection des zones métalliques dans le sinogramme simulé et au transfert des zones métalliques détectées sur le sinogramme ;
(S3.3) Détermination des zones métalliques dans le premier volume à l'aide de la géométrie de projection estimée et des zones métalliques détectées dans le sinogramme.

5. Procédé selon l'une des revendications précédentes, **caractérisé en ce que** la correction des zones métalliques dans le sinogramme à l'étape (S4) consiste en une ou plusieurs des étapes suivantes :
(S4.1) Remplissage des zones métalliques du sinogramme avec de nouvelles valeurs de pixels, qui sont soit calculées à partir des pixels voisins, soit correspondent à des valeurs de pixels artificielles ;
(S4.2) Fusion pondérée des nouvelles valeurs de pixels de l'étape précédente (S4.1) avec les valeurs de pixels du sinogramme.

6. Procédé selon l'une des revendications précédentes, **caractérisé en ce que** la correction des zones métalliques dans le deuxième volume à l'étape (S6) consiste en une ou plusieurs des étapes suivantes :
(S6.1) Remplissage des zones métalliques dans le deuxième volume avec des valeurs provenant du premier volume reconstruit ou des valeurs artificielles ;
(S6.2) Fusion pondérée des nouvelles valeurs de l'étape précédente (S6.1) avec les valeurs du deuxième volume.

7. Procédé selon l'une des revendications précédentes, **caractérisé en ce que** la MAC comprend les étapes suivantes à l'étape (S1) et les répète de préférence de manière itérative jusqu' à ce qu'un critère de convergence soit atteint :
(S1.1) Reconstruction d'un troisième volume avec une géométrie de projection estimée ;
(S1.2) Estimation de la géométrie de projection en enregistrant les images de projection du sinogramme avec le troisième volume.

8. Procédé selon la revendication 7, **caractérisé en ce que** l'enregistrement des images de projection à l'étape (S1.2) est effectué en générant des sinogrammes simulés avec la géométrie de projection estimée et en les comparant au sinogramme par des mesures de similarité.

9. Procédé selon l'une des revendications 1 à 6, **caractérisé en ce que**, à l'étape (S1), la MAC effectue une estimation de la géométrie de projection par l'évaluation de métriques sur une ou plusieurs conditions de cohérence dans le sinogramme.

10. Procédé selon l'une des revendications 1 à 6, **caractérisé en ce que** la MAC comprend les étapes suivantes à l'étape (S1) et les répète de préférence de manière itérative :
(S1.1) Reconstruction d'un troisième volume avec la géométrie de projection estimée ;
(S1.2) Calcul d'une métrique de qualité d'image sur le troisième volume, telle qu'une mesure de netteté ou l'évaluation d'une condition de lissage ;
(S1.3) Ajustement de la géométrie de projection estimée pour améliorer la métrique de qualité d'image.

11. Programme informatique comprenant un code lisible par ordinateur qui, lorsqu'il est exécuté par un système TNV assisté par ordinateur (1), amène ce dernier à exécuter les étapes de procédé de l'une des revendications de procédé précédentes.

12. Système TNV assisté par ordinateur (1) comprenant un appareil de radiographie (2) et une unité de calcul (8) qui est configurée pour exécuter le programme informatique selon la revendication 11.
